# EUROPÄISCHE PATENTSCHRIFT

(11) **EP 1 147 026 B1**
(45) Veröffentlichungstag und Bekanntmachung des Hinweises auf die Patenterteilung: **04.02.2004**
(21) Anmeldenummer: 00977553.7
(22) Anmeldetag: 22.11.2000
(51) Int. Cl.: B60K 37/02, G01D 13/28, G01P 1/08

(54) **INSBESONDERE FÜR EIN KRAFTFAHRZEUG BESTIMMTES ANZEIGEINSTRUMENT**
DISPLAY INSTRUMENT PARTICULARLY FORESEEN FOR A MOTOR VEHICLE
INSTRUMENT D'AFFICHAGE PARTICULIEREMENT PREVU POUR UN VEHICULE AUTOMOBILE

(30) Priorität: 24.11.1999 DE 19956542
(43) Veröffentlichungstag der Anmeldung: 24.10.2001
(73) Patentinhaber: SIEMENS AKTIENGESELLSCHAFT, 80333 München (DE)
(72) Erfinder: NOLL, Heinrich, 64823 Gross-Umstadt (DE); REIN, Matthias, 64380 Rossdorf (DE)
(86) Internationale Anmeldenummer: PCT/EP2000/011608
(87) Internationale Veröffentlichungsnummer: WO 2001/038120

(56) Entgegenhaltungen:
- EP-A- 0 679 871
- DE-U- 9 420 813
- PATENT ABSTRACTS OF JAPAN vol. 1997, no. 08, 29. August 1997 (1997-08-29) & JP 09 101182 A (SHINWA DENSHI DEVICE HANBAI KK;OKUNO TOSHINORI), 15. April 1997 (1997-04-15)
- PATENT ABSTRACTS OF JAPAN vol. 1996, no. 03, 29. März 1996 (1996-03-29) & JP 07 294293 A (NIPPON SEIKI CO LTD), 10. November 1995 (1995-11-10)

## Beschreibung

Die Erfindung betrifft ein insbesondere für ein Kraftfahrzeug bestimmtes Anzeigeinstrument, welches einen mit einer als Lichtleiter ausgebildeten Zeigerwelle drehfest verbundenen, lichtleitenden Zeiger und eine Leuchtdiode hat, die zum Einkoppeln von Licht in die Zeigerwelle und damit auch in den Zeiger von einer hinter einem Zeigerantrieb angeordneten Leiterplatte hinter der dem Zeiger abgewandten Stirnfläche der Zeigerwelle gehalten ist.

Anzeigeinstrumente der vorstehenden Art sind bekannt. Bei ihnen ist die Leuchtdiode auf der der Zeigerwelle zugewandten Seite der Leiterplatte gegenüber der unteren Stirnfläche der Zeigerwelle angeordnet. Deshalb braucht man das von der Leuchtdiode ausgesandte Licht lediglich einmal in die Zeigerwelle einzukoppeln und einmal umzulenken, um es in den radial ausgerichteten Zeiger gelangen zu lassen. Die Anordnung einer Leuchtdiode auf der dem Zeigerantrieb zugewandten Seite der Leiterplatte bereitet jedoch in der Praxis oftmals Probleme, weil in diesem Bereich die Platzverhältnisse sehr beengt sind.

Die EP 0 679 871 B1 zeigt ein solches Anzeigeinstrument, bei der sich die Leuchtdiode in einem Hohlraum der Zeigerwelle befindet. Die Leuchtdiode ist dabei auf der Leiterplatte in dem Raum zwischen der Leiterplatte und dem Zifferblatt untergebracht.

In der JP 9-101182 ist ein Anzeigeinstrument gezeigt, bei dem in einer Leiterplatte eine Durchbrechung vorgesehen ist, durch die das Licht der Leuchtdiode zum Zeiger gelangt. Allerdings ragt die Leuchtdiode nicht in diese Durchbrechung, vielmehr führt die Zeigerwelle durch die Durchbrechung zur Außenseite der Leiterplatte, so dass dort die Leuchtdiode anzuordnen ist und dort das Licht in die Zeigerwelle eingekoppelt werden muss, wodurch sich die Baugröße des Anzeigeinstrumentes unerwünscht vergrößert.

Der Erfindung liegt das Problem zugrunde, ein insbesondere für ein Kraftfahrzeug bestimmtes Anzeigeinstrument der eingangs genannten Art so zu gestalten, dass der Platzbedarf für die Anordnung der Leuchtdiode möglichst gering ist.

Dieses Problem wird erfindungsgemäß dadurch gelöst, dass die Leiterplatte fluchtend zu der Stirnfläche der Zeigerwelle eine Durchbrechung hat und die Leuchtdiode in diese Durchbrechung ragt.

Durch diese Gestaltung kann der Querschnitt der Leiterplatte zumindest teilweise für die Aufnahme der Leuchtdiode benutzt werden, so dass die Leuchtdiode weniger weit oder nicht in den Zeigerantrieb ragen muss und dort weniger Platz beansprucht.

Die Fertigung des Anzeigeinstrumentes ist besonders kostengünstig, wenn die Leuchtdiode auf der dem Zeigerantrieb abgewandten Seite der Leiterplatte mit dieser elektrisch verbunden ist und mit einer Linse in die Durchbrechung ragt. Die elektrische Verbindung einer solchen Leuchtdiode kann durch übliches Löten erfolgen.

Der Platzbedarf für die Leuchtdiode ist besonders gering, wenn die Leuchtdiode auf der dem Zeigerantrieb zugewandten Seite der Leiterplatte mit dieser elektrisch verbunden ist und mit ihrer Basis in die Durchbrechung ragt.

Das Licht kann besonders verlustarm in die Zeigerwelle eingekoppelt werden, wenn gemäß einer anderen, vorteilhaften Weiterbildung der Erfindung die Leuchtdiode auf der dem Zeigerantrieb abgewandten Seite der Leiterplatte angeordnet ist und in der Durchbrechung eine als separates Bauteil ausgebildete, das Licht der Leuchtdiode aufnehmende und in die Zeigerwelle einkoppelnde Linse eingesetzt ist.

Die Linse vermag besonders fest auf der Leiterplatte zu halten und ist sehr rasch durch Verpressen oder Verklipsen zu montieren, wenn sie einen umlaufenden, mit der Leiterplatte verpreß- oder verklipsbaren Halterand hat.

Der Zeiger kann mit einer anderen Farbe als die der Leuchtdiode beleuchtet sein, wenn die Linse eine Färbung aufweist. Alternativ wäre die Verwendung einer vergleichsweise teuren Multi-Farb-Leuchtdiode für wechselnde Beleuchtungsfarben denkbar.

Wenn die Leuchtdiode auf der dem Zeigerantrieb abgewandten Seite der Leiterplatte angeordnet ist und in die Durchbrechung ragt, dann kann man zur Vermeidung von Lichtverlusten den Abstand zwischen der Einkoppelfläche der Zeigerwelle und der Leuchtdiode dadurch sehr gering halten, dass die Zeigerwelle teilweise in die Durchbrechung der Leiterplatte eingreift.

Eine insbesondere bei lichtstarken Leuchtdioden vorteilhafte Weiterbildung der Erfindung sieht vor, dass die Leuchtdiode ein Wärmeableitelement aufweist. Dieses Wärmeableitelement ist in besonders einfacher Form ein Gehäuse der Leuchtdiode, das hierfür bspw. besonders groß gestaltet ist. Es können aber auch spezielle Wärmeableitelemente wie Kühlrippen vorgesehen sein.

Gemäß einer anderen vorteilhaften Weiterbildung der Erfindung ist in die Durchbrechung der Leiterplatte eingreifend ein Reflektor angeordnet, der den nutzbaren, in die Zeigerwelle einkoppelbaren Lichtanteil der Leuchtdiode erhöht. In besonders einfacher Weise kann dieser Reflektor in die Leiterplatte eingesteckt, eingepreßt oder mit der Leiterplatte verklipst sein.

Die Bauteilanzahl eines solchen erfindungsgemäßen Anzeigeinstruments lässt sich vorteilhaft verringern, wenn entsprechend einer anderen Weiterbildung der Erfindung der Reflektor ein elektrisches Leitelement zur Kontaktierung der Leuchtdiode aufweist.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Figur 1: einen Vertikalschnitt durch einen Teilbereich eines erfindungsgemäßen Anzeigeinstrumentes,
- Figur 2: einen der Figur 1 entsprechenden Vertikalschnitt durch eine zweite Ausführungsform des Anzeigeinstrumentes,
- Figur 3: einen Schnitt durch den Bereich einer Leiterplatte mit einer Leuchtdiode und einem Ende einer Zeigerwelle,
- Figur 4: einen der Figur 3 entsprechenden Schnitt durch eine geänderte Ausführungsform,
- Figur 5: einen der Figur 3 entsprechenden Schnitt durch eine weitere Ausführungsform,
- Figur 6: einen der Figur 3 entsprechenden Schnitt durch eine weitere Ausführungsform mit einem Reflektor und
- Figur 7: eine alternative Ausführungsform mit einem Reflektor nach Figur 6.

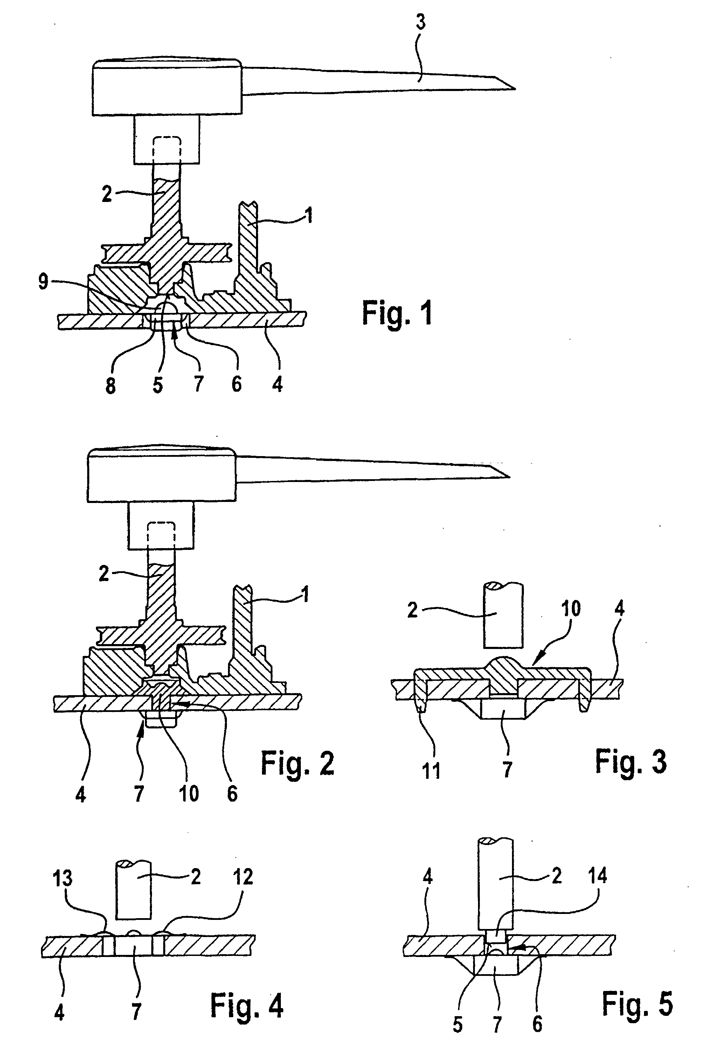

Die Figur 1 zeigt einen Teilbereich eines Zeigerantriebes 1 eines nicht weiter dargestellten Anzeigeinstruments (z.B. Tachometer) eines Kraftfahrzeugs, in welchem Zeigerantrieb 1 eine Zeigerwelle 2 aus lichtleitendem Material gelagert ist. Diese Zeigerwelle 2 trägt einen ebenfalls lichtleitenden Zeiger 3. Auf der dem Zeiger 3 abgewandten Seite des Zeigerantriebs 1 ist eine Leiterplatte 4 angeordnet, welche fluchtend zur unteren Stimfläche 5 der Zeigerwelle 2 eine Durchbrechung 6 hat. In diese Durchbrechung 6 ragt von der Seite des Zeigerantriebs 1 her eine Leuchtdiode 7 mit ihrer Basis 8 hinein, so dass lediglich eine Linse 9 der Leuchtdiode 7 aus der Ebene der Leiterplatte 4 vorspringt. Die Leuchtdiode 7 wird vorteilhaft mit einem Strom von in etwa 50 mA (Größenordnung) betrieben und weist in diesem Beispiel vorzugsweise einen Abstrahlwinkel von in etwa 10° beiderseits ihrer Mittelachse auf.

Bei der Ausführungsform nach Figur 2 ist die Leuchtdiode 7 auf der dem Zeigerantrieb 1 abgewandten Seite der Leiterplatte 4 angeordnet und dort mit ihr verlötet. Von der Seite der Zeigerwelle 2 her ist eine separate Linse 10 in die Durchbrechung 6 eingesetzt, welche Linse 10 auf der Leiterplatte 4 aufsitzt und das Licht von der Leuchtdiode 7 in die Zeigerwelle 2 einkoppelt.

Wie die Figur 3 zeigt, kann die separate Linse 10 einen umlaufenden Halterand 11 haben, der in die Leiterplatte 4 eingepresst oder eingeklipst ist, so dass die Linse 10 besonders sicher auf der Leiterplatte 4 gehalten ist.

Die Figur 4 verdeutlicht, dass die Leuchtdiode 7 von oben her mit Leitern 12, 13 auf der Leiterplatte 4 aufsitzt.

Die Figur 5 zeigt, dass die Zeigerwelle 2 mit einem Ansatz 14 in die Leiterplatte 4 ragen kann, so dass ihre untere Stimfläche 5 der Leuchtdiode 7 besonders nahe ist.

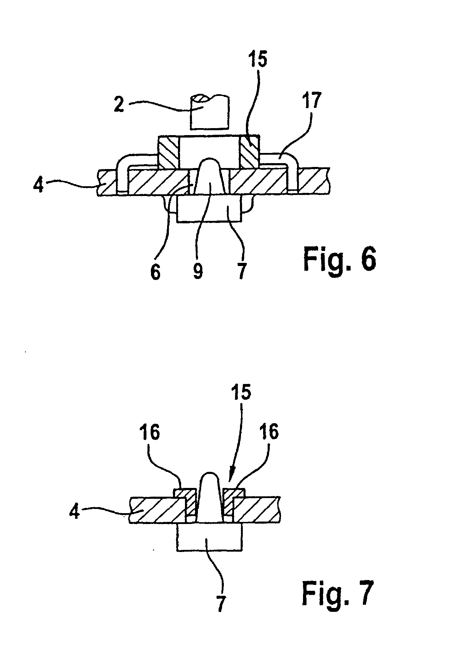

In Figur 6 ist die Leuchtdiode 7 auf der dem hier nicht dargestellten Zeigerantrieb abgewandten Seite der Leiterplatte 4 angeordnet gezeigt, wobei die Linse 9 in die Durchbrechung 6 der Leiterplatte 4 hineinragt. Ein Reflektor 15 mit Haltearmen 17 ist in die Leiterplatte 4 eingepresst und bündelt das von der Leuchtdiode 7 ausgesandte Licht vor Eintritt in die Zeigerwelle 2.

Figur 7 zeigt, wie der Reflektor 15 mittels Durchkontaktierungen 16 zur elektrischen Kontaktierung der Leuchtdiode 7 durch die Leiterplatte 4 hindurch gebildet werden kann.

## Patentansprüche

1. Insbesondere für ein Kraftfahrzeug bestimmtes Anzeigeinstrument, welches einen mit einer als Lichtleiter ausgebildeten Zeigerwelle (2) drehfest verbundenen, lichtleitenden Zeiger (3) und eine Leuchtdiode (7) hat, die zum Einkoppeln von Licht in die Zeigerwelle (2) und damit auch in den Zeiger (3) von einer hinter einem Zeigerantrieb (1) angeordneten Leiterplatte (4) hinter der dem Zeiger (3) abgewandten Stirnfläche der Zeigerwelle (2) gehalten ist, **dadurch gekennzeichnet, dass** die Leiterplatte (4) fluchtend zu der Stirnfläche (5) der Zeigerwelle (2) eine Durchbrechung (6) hat und die Leuchtdiode (7) in diese Durchbrechung (6) ragt.

2. Anzeigeinstrument nach Anspruch 1, **dadurch gekennzeichnet, dass** die Leuchtdiode (7) auf der dem Zeigerantrieb (1) abgewandten Seite der Leiterplatte (4) mit dieser elektrisch verbunden ist und mit einer Linse (9) in die Durchbrechung (6) ragt.

3. Anzeigeinstrument nach Anspruch 1, **dadurch gekennzeichnet, dass** die Leuchtdiode (7) auf der dem Zeigerantrieb (1) zugewandten Seite der Leiterplatte (4) mit dieser elektrisch verbunden ist und mit ihrer Basis (8) in die Durchbrechung (6) ragt.

4. Anzeigeinstrument nach Anspruch 1, **dadurch gekennzeichnet, dass** die Leuchtdiode (7) auf der dem Zeigerantrieb (1) abgewandten Seite der Leiterplatte (4) angeordnet ist und in der Durchbrechung (6) eine als separates Bauteil ausgebildete, das Licht der Leuchtdiode (7) aufnehmende und in die Zeigerwelle (2) einkoppelnde Linse (10) der Leuchtdiode (7) eingesetzt ist.

5. Anzeigeinstrument nach Anspruch 4, **dadurch gekennzeichnet, dass** die Linse (10) einen umlaufenden, mit der Leiterplatte (4) verpreß- oder verklipsbaren Halterand (11) hat.

6. Anzeigeinstrument nach einem der Ansprüche 2, 4 oder 5, **dadurch gekennzeichnet, dass** die Linse (10) eine Färbung aufweist.

7. Anzeigeinstrument nach einem der vorangehenden Ansprüche, **dadurch gekennzeichnet, dass** die Zeigerwelle (2) teilweise in die Durchbrechung (6) der Leiterplatte (4) eingreift.

8. Anzeigeinstrument nach einem der vorangehenden Ansprüche, **dadurch gekennzeichnet, dass** die Leuchtdiode (7) ein Wärmeabteitelement aufweist.

9. Anzeigeinstrument nach einem der vorangehenden Ansprüche, **dadurch gekennzeichnet, dass** in die Durchbrechung (6) der Leiterplatte (4) eingreifend ein Reflektor (15) angeordnet ist.

10. Anzeigeinstrument nach Anspruch 9, **dadurch gekennzeichnet, dass** der Reflektor (15) ein elektrisches Leitelement (16) zur Kontaktierung der Leuchtdiode (7) aufweist.

## Claims

1. Display instrument which is intended in particular for a motor vehicle and which has a light-guiding pointer (3) which is connected fixed in terms of rotation to a pointer shaft (2) formed as a light guide, and a light-emitting diode (7) which, in order to input light into the pointer shaft (2) and thus also into the pointer (3) is held behind the end face of the pointer shaft (2) facing away from the pointer (3) by a printed circuit board (4) which is arranged behind a pointer drive (1), **characterized in that** the printed circuit board (4) has a breakthrough (6) flush with the end face (5) of the pointer shaft (2), and the light-emitting diode (7) projects into this breakthrough (6).

2. Display instrument according to Claim 1, **characterized in that** the light-emitting diode (7) is electrically connected to the printed circuit board (4) on the side of said printed circuit board (4) facing away from the pointer drive (1), and projects, with a lens (9), into the breakthrough (6).

3. Display instrument according to Claim 1, **characterized in that** the light-emitting diode (7) is electrically connected to the printed circuit board (4) on the side of said printed circuit board (4) facing the pointer drive (1), and projects, with its base (8), into the breakthrough (6).

4. Display instrument according to Claim 1, **characterized in that** the light-emitting diode (7) is arranged on the side of the printed circuit board (4) facing away from the pointer drive (1), and a lens (10) - which is embodied as a separate component, receives light from the light-emitting diode (7) and inputs it into the pointer shaft (2) - of the light-emitting diode (7) is inserted into the breakthrough (6).

5. Display instrument according to Claim 4, **characterized in that** the lens (10) has a circumferential holding edge (11) which can be pressed or clipped to the printed circuit board (4).

6. Display instrument according to one of Claims 2, 4 or 5, **characterized in that** the lens (10) is coloured.

7. Display instrument according to one of the preceding claims, **characterized in that** the pointer shaft (2) engages partially in the breakthrough (6) of the printed circuit board (4).

8. Display instrument according to one of the preceding claims, **characterized in that** the light-emitting diode (7) has a heat-dissipating element.

9. Display instrument according to one of the preceding claims, **characterized in that** a reflector (15) is arranged so as to engage in the breakthrough (6) in the printed circuit board (4).

10. Display instrument according to Claim 9, **characterized in that** the reflector (15) has an electrical conducting element (16) for making contact with the light-emitting diode (7).

## Revendications

1. Instrument d'affichage destiné particulièrement à un véhicule automobile, qui a un indicateur (3) relié de façon solidaire en rotation à un arbre d'indicateur (2) conçu comme guide de lumière et conduisant la lumière et une diode électroluminescente (7), qui est maintenue par une carte imprimée (4) disposée derrière un entraînement d'indicateur (1) derrière le côté avant, opposé à l'indicateur (3), de l'arbre d'indicateur (2) pour l'injection de lumière dans l'arbre d'indicateur (2) et donc également dans l'indicateur (3), **caractérisé en ce que** la carte imprimée (4) a une ouverture (6) en alignement avec le côté avant (5) de l'arbre d'indicateur (2) et la diode électroluminescente (7) dépasse dans ce cette ouverture (6).

2. Instrument d'affichage selon la revendication 1, **caractérisé en ce que** la diode électroluminescente (7) est reliée électriquement sur le côté, opposé à l'entraînement d'indicateur (1) de la carte imprimée (4), à cette carte et dépasse avec une lentille (9) dans l'ouverture (6).

3. Instrument d'affichage selon la revendication 1, **caractérisé en ce que** la diode électroluminescente (7) est reliée électriquement, sur le côté opposé à l'entraînement d'indicateur (1), de la carte imprimée (4) à cette carte et dépasse avec sa base (8) dans l'ouverture (6).

4. Instrument d'affichage selon la revendication 1, **caractérisé en ce que** la diode électroluminescente (7) est disposée sur le côté, opposé à l'entraînement d'indicateur (1), de la carte imprimée (4) et une lentille (10) de la diode électroluminescente (7), conçue comme un composant séparé, recevant la lumière de la diode électroluminescente (7) et l'injectant dans l'arbre d'indicateur, est mise en place dans l'ouverture.

5. Instrument d'affichage selon la revendication 4, **caractérisé en ce que** la lentille (10) présente un bord de retenue (11) périphérique et pouvant être comprimé ou clipsé avec la carte imprimée (4).

6. Instrument d'affichage selon l'une quelconque des revendications 2, 4 ou 5, **caractérisé en ce que** la lentille (10) présente une coloration.

7. Instrument d'affichage selon l'une quelconque des revendications précédentes, **caractérisé en ce que** l'arbre d'indicateur (2) s'engage partiellement dans l'ouverture (6) de la carte imprimée (4).

8. Instrument d'affichage selon l'une quelconque des revendications précédentes, **caractérisé en ce que** la diode électroluminescente (7) est un élément de dérivation de chaleur.

9. Instrument d'affichage selon l'une quelconque des revendications précédentes, **caractérisé en ce qu'**un réflecteur (15) est disposé en s'engageant dans l'ouverture (6) de la carte imprimée (4).

10. Instrument d'affichage selon la revendication 9, **caractérisé en ce que** le réflecteur (15) présente un élément de guidage (16) électrique pour l'établissement du contact de la diode électroluminescente (7).
